Europäisches Patentamt

European Patent Office

Office européen des brevets

(11) Veröffentlichungsnummer: **0 068 431**
A2

(12) # EUROPÄISCHE PATENTANMELDUNG

(21) Anmeldenummer: 82105513.4

(22) Anmeldetag: 23.06.82

(51) Int. Cl.³: **G 01 B 11/24**, G 01 B 11/02

(30) Priorität: 29.06.81 DE 3125476

(43) Veröffentlichungstag der Anmeldung: 05.01.83
Patentblatt 83/1

(84) Benannte Vertragsstaaten: **AT BE CH FR LI SE**

(71) Anmelder: **Licentia Patent-Verwaltungs-GmbH,
Theodor-Stern-Kai 1, D-6000 Frankfurt/Main 70 (DE)**

(72) Erfinder: **Küttner, Heinz, Dr., Sophienstrasse 11,
D-6232 Bad Soden (DE)**
Erfinder: **Kühn, Klaus, Jochim-Sahling-Weg 75,
D-2000 Hamburg 53 (DE)**
Erfinder: **Meyne, Eckard, In den Lindendöhren 30,
D-3340 Wolfenbüttel (DE)**

(74) Vertreter: **Lertes, Kurt, Dr. et al, Licentia
Patent-Verwaltungs-GmbH Theodor-Stern-Kai 1,
D-6000 Frankfurt/M 70 (DE)**

(54) Vorrichtung zur Erkennung der Formen von Walzgutenden.

(57) Eine Vorrichtung zur Erkennung der Formen von Walzgutenden enthält eine erste Streifenbildkamera, mit der die
Walzgutoberfläche während der Bewegung erfaß wird.

Die Aufnahmeelemente der ersten Kamera sind quer
zur Bewegungsrichtung des Walzgutes angeordnet. Die Kamera wird von einem der Walzgutgeschwindigkeit proportionalen Signal synchronisiert und in einen Bildspeicher
eingegeben, mit dem eine Auswerteinrichtung verbunden
ist, die für eine bestimmte Schopfform eine Schnittlinie festlegt. Der Abstand dieser Schnittlinie von der Schnittstelle
der Schere wird überwacht und zur Erzeugung ein Scherensignal verwendet, das die Trennung des Schopfendes auslöst.

0068431

Licentia
Patent-Verwaltungs-GmbH
6000 Frankfurt/Main 70, Theodor-Stern-Kai 1

F 81/15
Eb/Mi
21.06.82

## Vorrichtung zur Erkennung der Formen von Walzgutenden

Die Erfindung bezieht sich auf eine Vorrichtung zur Erkennung der Formen von Walzgutenden.

Die Schopfenden von Walzgut werden mit Schopfscheren abgetrennt, die im allgemeinen von Hand Steuerbefehle erhalten. Mit Photodioden wird die Lage der Schopfenden in bezug auf die Schopfschere festgestellt. Eine Fernsehkamera bildet die Schopfenden auf einem Monitor ab. An Hand der Abbildungen der Schopfenden werden die Schnittbereiche festgelegt. Sobald diese Schnittbereiche die Schnittstellen der Schere erreicht haben, wird unter Berücksichtigung der Auslösezeit der Schere der Steuerbefehl manuell abgegeben. Diese Methode der Scherensteuerung ist mit Ungenauigkeiten behaftet. Deshalb ergeben sich große Schrottanteile.

Der Erfindung liegt die Aufgabe zugrunde, eine Vorrichtung zur Erkennung der Formen von Walzgutenden zu entwickeln, mit der unter optimaler Anpassung an die jeweilige Randform eine selbsttätige Steuerung der Schopfschere möglich ist.

Die Aufgabe wird erfindungsgemäß dadurch gelöst, daß die Oberfläche des Walzguts während der Bewegung in einer ersten Streifenbildkamera abbildbar ist, deren lichtelektrische Aufnahmeelemente in einer Zeile quer zur Walzgutbewegungsrichtung angeordnet sind und die durch ein der Walzgutgeschwindigkeit proportionales Signal synchronisiert ist, sowie einen mit einem Analog/Digital-Umsetzer verbundenen digitalen Bildspeicher aufweist, daß die digitalen Daten des Bildspeichers einer nachgeschalteten Auswerteinrichtung für die Festlegung der Schittlinie zuführbar sind und daß nach der ersten Streifenbildkamera eine zweite Streifenbildkamera, deren lichtelektrische Aufnahmeelemente in einer Zeile in Übereinstimmung mit der Bewegungsrichtung des Walzgutes angeordnet sind, an eine die Position des jeweiligen Rands aus den Daten des Bildspeichers fortlaufend bestimmende Auswerteinrichtung angeschlossen ist, die aus dem Abstand des Randes von der Schnittlinie der Schere ein Steuersignal für eine Schere erzeugt, die beim Durchlaufen der Schnittlinie unter der Abscherstelle das Walzgut trennt.

Die für eine günstige Materialausnützung notwendigen Schnittstellen für die jeweiligen Schopfformen lassen sich festlegen. Beispielsweise soll der Schnitt an der Stelle vorgenommen werden, an der der Schopf gerade die Sollbreite des Walzguts erreicht hat. Vielfach genügt es für die weitere Verarbeitung des Walzguts, wenn die Schöpfe an Stellen abgeschnitten werden, die 90 % bis 100 % der Sollbreite des Walzguts haben. Mit der oben erläuterten Vorrichtung läßt sich ein Abschneiden an den vorgegebenen Schnittstellen automatisch erreichen. Daher fällt weniger Schrott an. Dies bedeutet eine Erhöhung der Wirtschaftlichkeit bei der Walzguterzeugung. Als Streifenbildkameras eignen sich die unter der Type AP 26 hergestellten Geräte von AEG-TELEFUNKEN.

Bei einer bevorzugten Ausführungsform ist vorgesehen, daß vor der ersten Streifenbildkamera eine dritte Streifenbildkamera angeordnet ist, deren lichtelektrische Aufnahmeelemente in einer Zeile in Übereinstimmung mit der Bewegungsrichtung des Walzgutes angeordnet sind und die mit der die Geschwindigkeit des Walzgutes aus den Daten des Bildspeichers der Streifenbildkamera fortlaufend bestimmenden Auswerteinrichtung verbunden ist, die das der Walzgutgeschwindigkeit proportionale Synchronisiersignal an die erste Streifenbildkamera abgibt.

Die dritte Streifenbildkamera dient hierbei als Geschwindigkeitssensor für das Walzgut. Mit dieser Anordnung läßt sich eine hohe Meßgenauigkeit erreichen. Die Zeilenfolgefrequenz der ersten Streifenbildkamera wird dabei direkt an die jeweilige Walzgutgeschwindigkeit angepaßt. Das Bild des Walzgutendes hängt von der Auflösung der Optik der Streifenbildkamera und der verwendeten Halbleiterzeile ab.

Bei einer bevorzugten Ausführungsform wird für die Geschwindigkeitsbestimmung jeweils ein Oberflächenelement des Walzguts ausgewählt, dessen über das Abbild auf der Diodenzeile der dritten Streifenbildkamera erfaßte Bewegung über einen in der Auswerteinheit angeordneten Prozessor verfolgt wird. Die Kamera hat z. B. eine Auflösung von 8 bit in der Grauwertskala pro Bildpunkt. Aus der Bewegung der auf die Zeile der Kamera abgebildeten Oberfläche wird der momentane Wert der Geschwindigkeit des Walzgutes über den Prozessor und in die Auswerteinheit gewonnen. Der Prozessor führt arithmetische Rechnungen unter Berücksichtigung der Korrelation der erfaßten Oberflächenstelle aus. Voraussetzung ist, daß die Oberfläche durch eine Strukturierung die Unterscheidung von ausgewählten Stellen für die Geschwindigkeitsbestimmung zuläßt. Eine solche Strukturierung ist z. B. durch den Zunder vorhanden, der die Oberfläche des Walzguts bedeckt. Aus der Bewegung des ausgewählten Oberflächenelements über die Zeile hinweg und aus der Zeit, die beim Zurücklegen einer bestimmten Wegstrecke vergeht, wird die Geschwindigkeit des Oberflächenelements und damit des Walzguts bestimmt. Nach dem Durchgang eines derartigen Oberflächenelementes wird ein vom Anfang der Zeile erfaßtes neues Oberflächenelement für die Geschwindigkeitsbestimmung ausgewählt. Dadurch ist eine kontinuierliche Feststellung der Geschwindigkeit gewährleistet.

Bei einer zweckmäßigen Ausführungsform ist vorgesehen, daß die Streifenbildkamera, nachdem die Randlage des Walzgutes das Sichtfeld der zweiten Kamera überschritten hat, die dritte Streifenbildkamera für die Bestimmung der Randlage aus der Geschwindigkeit des Rands auf die Auswerteinheit umschaltet. Bei dieser Anordnung wird anstelle der Verfolgung des jeweiligen vorderen Rands des Walzgutes durch die zweite Streifenbildkamera die Lage des Rands über die Geschwindigkeit des Walzgutes bestimmt, die von der dritten Streifenbildkamera abgeleitet wird. Diese Maßnahme ist nur für den Fall erforderlich, daß durch einen großen Abstand zwischen Rand und Schnittlinie dieser Abstand nicht mehr von der zweiten Streifenbildkamera erfaßt werden kann.

Vorzugsweise ist der Inhalt des Bildspeichers der ersten Streifenbildkamera auf einem Monitor darstellbar. Durch den Monitor kann die Vorrichtung auf einfache Weise überwacht werden. Da die manuelle Befehlsabgabe nicht mehr erforderlich ist, kann die für die Überwachung bestimmte Bedienungsperson noch andere Aufgaben übernehmen.

Eine günstige Ausführungsform besteht darin, daß durch die dritte Streifenbildkamera die Enden der Walzgutränder und die Geschwindigkeit der Enden erfaßt und die gespeicherten Daten an die Auswerteinheit zur Bestimmung der Schnittlinie für die Enden abgegeben werden. Die Vorrichtung erkennt auch die rückwärtigen Enden des Walzgutes. Die Geschwindigkeit des auf der Diodenzeile abgebildeten Walzgutendes wird zur Synchronisierung der ersten Streifenbildkamera verwendet. Die Auswerteinheit bestimmt aufgrund des von der ersten Streifenbildkamera erfaßten Bildes die Lage der Schnittlinie. Die dritte Streifenbildkamera gibt dann das Steuersignal an die Schere ab.

Bei einer bevorzugten Ausführungsform werden die von der ersten Streifenbildkamera erzeugten Bilder nach der Festlegung der jeweiligen Schnittlinie des Walzgutanfangs zur Messung der Materialbreite ausgewertet. Es kann beispielsweise eine Meldung erzeugt werden, wenn eine gewünschte Materialbreite nicht erreicht wird.

Eine andere günstige Ausführungsform besteht darin, daß die mit der dritten Streifenbildkamera festgestellte Geschwindigkeit des Walzgutes auf vorher bestimmte Grenzen der Änderung überwacht wird. Es werden also die Beschleunigungen des Walzgutes auf bestimmte Grenzwerte hin überwacht. Diese Grenzwerte können als Folge einer Störung entstehen. Beispielsweise treten diese Änderungen beim Anstoßen des Walzgutes auf. Daher können Meldungen über Störungen beim Erreichen der Grenzwerte ausgelöst werden.

Die Erfindung wird im folgenden an Hand eines in einer Zeichnung dargestellten Ausführungsbeispiels näher erläutert, aus dem sich weitere Merkmale sowie Vorteile ergeben.

Es zeigen:

Figur 1    eine perspektivische Ansicht einer Vorrichtung zum Erkennen der stirnseitigen Walzgutränder,

Figur 2    eine Ansicht des vorderen Walzgutrandes von oben,

Figur 3    eine Ansicht des hinteren Walzgutrandes von oben.

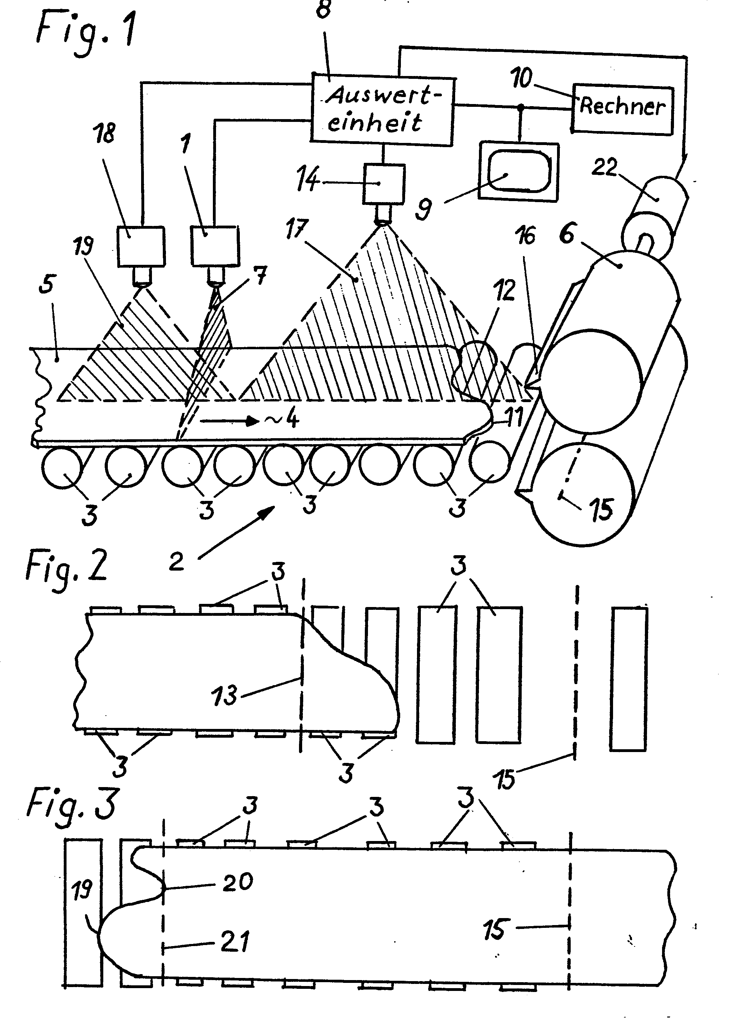

Bei der in Figur 1 dargestellten Vorrichtung zum Erkennen der stirnseitigen Walzguträndern ist eine erste Streifenbildkamera 1 vorhanden, die oberhalb eines Rollganges 2 angeordnet ist, der aus Transportrollen 3 besteht. Die Streifenbildkamera 1 enthält eine lichtempfindliche, nicht näher dargestellte Diodenzeile, die quer zur Transportrichtung 4 eines Walzblechs 5 angeordnet ist, das auf dem Rollgang 2 gegen eine Schopfschere 6 transportiert wird. Das Sichtfeld der Streifenbildkamera 1 ist in Figur 1 mit 7 schraffiert dargestellt. Hieraus geht hervor, daß das Walzblech in seiner gesamten Breite von der Streifenbildkamera 1 aufgenommen wird, wenn es unter der Kamera 1 hindurchläuft. Das Walzband 5 hat üblicherweise eine Temperatur von etwa 800 °C. Die Streifenbildkamera 7 erfaßt somit das Eigenlicht des Walzbandes 5, das beispielsweise 2 cm stark ist.

Als Streifenbildkamera 1 kann eine von AEG-TELEFUNKEN unter der Type AP 26 hergestellte Kamera verwendet werden, die nachstehend noch näher erläutert ist.

Die Streifenbildkamera, Typ AP 26, ist eine im sichtbaren und nahen IR arbeitende Kamera. Sie ist für Aufklärungszwecke entwickelt worden. Der spezielle Vorteil liegt in der elektronischen Szenenabtastung und der erforderlichen geringen Übertragungsbandbreite, die eine Störbarkeitsreduzierung zur Folge hat.

Da das Meßergebnis als elektronisches Signal vorhanden ist, ergeben sich Möglichkeiten durch z. B. Bandspeicherung, Bildmustererkennung, Monitordarstellung usw.

Kamerabeschreibung

Das durch das Objekt einfallende reflektierte Szenenlicht fällt auf die lichtempfindliche Diodenzeile. Das Photo-Diodenarray wird so gesteuert, daß eine optimale Belichtung in Abhängigkeit der Geschwindigkeit über Grund und der Szenenbeleuchtung gewährleistet ist. Der Regelbereich ist für ein v/h-Verhältnis von 0,2 bis 2,0 und einen Szenenbeleuchtungsbereich von 50 - 100.000 Lux ausgelegt.

Das so gewonnene und verstärkte elektronische Signal wird in ein digitales 8-bit-Signal umgewandelt, das am Kameraausgang zusammen mit den Steuersignalen in digitaler Form zur Verfügung steht.

## Bedienung

Ein Bediengerät ermöglicht neben der Ein/Ausschaltung der Kamera und der weiteren peripheren Systemkomponenten eine Umschaltung der Geschwindigkeitseinstellung von Hand auf Automatik. In Stellung "Automatik" wird ein vorhandenes Geschwindigkeitssignal direkt auf die Kamera geschaltet und damit die Zeilenfolgefrequenz der Kamera angepaßt. Von der Kamera werden 2048 BP pro Zeile geliefert.

## Netzgerät

Das für die Kamera notwendig Netzgerät ist als separater Baustein der Kamera direkt angeflanscht und arbeitet mit einer Stromversorgung von 1 115 V / 400 Hz. Andere Stromversorgungen sind möglich.

## Bildspeicher

Da Video-Bandgeräte jedoch nur für Fernsehbilder nach der CCIR-Norm 625 Zeilen 2:1 Zeilensprung und 50 Hz/Halbbildfrequenz arbeiten, mußte als Zwischenbaustein ein Bildspeicher und Umsetzer entwickelt werden. Jedes der 2048 Zeilenelemente liefert ein 8-bit-Signal.

Dieser Bildspeicher übernimmt im ersten Speicher Zeile für Zeile des Sensors und speichert diese hintereinander ab. Ein Zähler läuft mit und sorgt für den Umschaltvorgang von Schreiben auf Lesen. Ist also ein Bild mit ca. 580 sichtbaren Zeilen vollständig, so werden die nachfolgenden Zeilen in einen zweiten Speicher eingeschrieben. Während der zweite Speicher vollgeschrieben wird, wird der erste Speicher laufend in CCIR-Norm ausgelesen und dieses Bild kann z. B. auf einem Monitor dargestellt werden. Ist der zweite Speicher vollgeschrieben, wiederholt sich der Umschaltvorgang in umgekehrter Richtung.

Das Walzband 5 läuft unter der Streifenbildkamera 1 auf die Schopfschere 6 zu. Zum Aufbau eines Bildes der Oberfläche des Walzbandes 5 wird noch die Walzbandgeschwindigkeit gemessen. Ein der Geschwindigkeit des Walzbandes 5 proportionales Signal wird zur Synchronisierung der Streifenbildkamera 1 eingesetzt. Bei einer Zeilenfrequenz von z. B. 5 kHz kann das jeweilige Walzgutende im Zeitraster von 200 $\mu$sec. schrittweise verfolgt werden.

Die im Bildspeicher der Streifenbildkamera 1 vorhandenen Daten der Walzbandoberfläche werden an eine Auswerteinheit 8 übertragen, die mit der Streifenbildkamera 1 verbunden ist. An die Auswerteinheit 8 ist ein Fernsehmonitor 9 und ein Rechner 10 angeschlossen. In der Auswerteinheit 8 werden unter Ausnutzung des Rechners 10 die Oberflächenaufnahmen des Walzbandes 5 ausgewertet. Die Auswertung dient der Zuordnung einer Schnittlinie zu einer bestimmten quer zur Transportrichtung 4 verlaufende Zone des Walzbandes 5. Die Zuordnung erfolgt z. B. dann, wenn vom Beginn 11 des vorderen Walzgutrandes 12 das Walzband 100 % seiner Sollbreite erreicht hat. Vielfach reichen auch Breiten von 90 % bis 99 % der Solbreite für die Zuordnung der Schnittlinie 13 aus, die in Figur 2 gestrichelt dargestellt ist.

Neben der ersten Streifenbildkamera 1 ist, in Transportrichtung 4 des Walzbandes 5 gesehen, eine zweite Streifenbildkamera 14 oberhalb des Rollgangs 2 angeordnet. Die Streifenbildkamera 14 hat den gleichen Aufbau wie die Streifenbildkamera 1. Die nicht näher dargestellte Diodenzeile der Streifenbildkamera 14 ist in Übereinstimmung mit der Bewegungsrichtung 4 des Walzgutes 5 angeordnet. Die Streifenbildkamera 14 ist ebenfalls mit der Auswerteinheit 8 verbunden. Das von der Streifenbildkamera 14 aufgenommene Bild der Oberfläche wird an die Auswerteinheit 8 übertragen. Die Auswerteinheit 8 erfaßt den Walzgutrand 12 und stellt an Hand der von der Kamera 14 ausgegebenen Daten über die Lage des Rands 12 den jeweiligen Abstand zwischen der Schnittstelle 15 der Schopfschere 6 und dem Rand 12 fest. An Hand dieses Abstands wird das Fortschreiten der zugeordneten Schnittstelle 13 gegen die Schnittstelle 15 der Schopfschere 6 überwacht. Der Walzgutrand ist aus dem Vergleich der Informationsinhalte aufeinanderfolgender Zeilen der zweiten Kamera 14 ermittelbar. Bei einem bestimmten Abstand der Schnittlinie 13 von der Schnittstelle 15 erzeugt die Auswerteinheit 8 ein Steuersignal für die Schopfschere 6. Dieser Abstand hängt von der Position der Schermesser 16 und der Stärke des Walzbandes 5 ab. Das Steuersignal veranlaßt die Schofpschere 6, das Walzband 5 dann abzutrennen, wenn die Schnittlinie 13 mit der Schnittstelle 15 übereinstimmt.

Die Streifenbildkamera 14 erfaßt aufgrund ihres Abstands und des Öffnungswinkels ihrer Optik ein Sichtfeld 17, das in Figur 1 schraffiert dargestellt ist.

Vor der ersten Streifenbildkamera 1 ist, in Bewegungsrichtung 4 des Walzgutes 2 gesehen, eine dritte Streifenbildkamera 18 oberhalb des Rollgangs 2 angeordnet, die den gleichen Aufbau hat wie die Streifenbildkamera 1. Die Diodenzeile der Streifenbildkamera 18 stimmt mit der Bewegungsrichtung 4 überein. Daraus ergibt sich unter Berücksichtigung des Abstandes vom Walzblech 5 und des Öffnungswinkels der Kamera-optik eine in Bewegungsrichtung verlaufende Zone auf der Walzbandoberfläche, die von der Kamera 18 erfaßt wird. Das von der Kamera 18 überwachte Sichtfeld ist in Figur 1 mit 19 bezeichnet. Die Kamera 18 ist ebenfalls an die Auswerteinheit 8 angeschlossen.

Die Streifenbildkamera 18 dient als Geschwindigkeitssensor. Mittels der von der Kamera 18 an die Auswerteinheit 8 abgegebenen Daten wird ein der Geschwindigkeit des Walzbandes 5 proportionales Signal erzeugt, das für die Synchronisation der Streifenbildkamera 1 verwendet wird. Hierbei wird am Schopfanfang der Walzgutrand 12 erfaßt und bestimmt aus dem vom Rand 12 während einer vorgegebenen Zeit auf der Diodenzeile zurückgelegten Weg unter Berücksichtigung der Abbildungsverhältnisse die Geschwindigkeit des Bandes.

Ist der Rand aus dem Schnittbereich der Kamera heraus, wird die Bandgeschwindigkeit wie folgt bestimmt: Es wird jeweils immer ein Oberflächenelement auf der Oberfläche des Walzbandes 5 ausgewählt. Aus der Zeitdauer des Überstreichens des Abbildes des Oberflächenelementes über die Diodenzeile der Streifenbildkamera 18 wird die Geschwindigkeit des Walzbandes 5 ermittelt. Die momentanen Geschwindigkeitswerte des Walzbandes 5 werden durch die Auswerteinheit 8 und den Rechner 10 bestimmt. Die Erfassung und Verfolgung des ausgewählten Elementes geschieht durch ein Korrelationsverfahren. Oberflächenelemente lassen sich durch die Strukturierung der Oberfläche des Walzbandes 5 erfassen. Die Strukturierung wird z. B. durch Zunder auf dem Walzband hervorgerufen.

Die Geschwindigkeit des Walzgutes soll durch die dritte Streifenbildkamera 18 nach dem Korrelationsverfahren dann erfaßt werden, wenn der Walzgutrand 12 das Sichtfeld 17 der zweiten Streifenbildkamera 14 verlassen hat, bevor das Steuersignal erzeugt wurde, weil der Walzgutrand bereits durch die Schopfschere 6 hindurchläuft. Zur weiteren Erfassung des Abstandes zwischen der festgelegten Schnittlinie 13 der Schnittstelle 15 der Schopfschere 6 schaltet die Auswerteinheit 8 nach der Auswertung der von der Kamera 14 ausgegebenen Daten auf die Kamera 18 um,deren Daten zur Abstandsüberwachung benutzt werden. Der Abstand zwischen Walzgutrand 12 und Schnittstelle 13 wird dann aus der Geschwindigkeit des Walzbandes 5 berechnet.

Die Streifenbildkamera 18 dient weiterhin zur Erfassung des hinteren Schopfendes 19 des Walzbandes 5. Sobald die am weitesten ins Walzband 5 hineinragende Ausnehmung 20 von der Streifenbildkamera 18 erfaßt wird, steuert diese den Aufbau eines Bildes des Endes des Walzbandes 5 im Speicher der Streifenbildkamera 18. Abhängig von der Form des Walzbandendes wird wiederum eine Schnittlinie 21 an eine Stelle gelegt, an der das Walzband 5 bei noch für die weitere Verarbeitung ausreichender Breite den minimalen Abstand vom hinteren Ende 19 hat. Die Breite kann in Übereinstimmung mit der Breite des Walzbandanfangs zwischen 90 und 100 % der Sollbreite liegen. Nach der Zuordnung der Schnittlinie 21 wird wiederum über die hintere Kontur der Abstand zwischen der Schnittlinie 21 und der Schnittstelle 15 in der Schopfschere laufend überwacht. In Abhängigkeit von einem bestimmten Abstand und der Walzbandstärke wird dann von der Auswerteinheit ein Steuersignal an einen Antrieb 22 zur Betätigung der Schere 6 abgegeben.

Die durch die Streifenbildkamera 18 gewonnenen Geschwindigkeitswerte des Walzbandes 5 lassen sich vorteilhafterweise auch für andere Zwecke verwenden, z. B. für die Regelung der Drehzahl des Rollgangs 2, der Schere 6 oder des ersten Walzgerüsts, das nicht näher dargestellt ist.

Nachdem die Schnittlinie 13 einer bestimmten Stelle des Walzbandes 5 zugeordnet ist, können die von der Streifenbildkamera 1 erzeugten Bilder der Walzbandoberfläche dahingehend ausgewertet werden, daß die Breite mit einer Sollbreite verglichen wird. Wenn eine bestimmte Sollbreite nicht erreicht wird, kann eine Fehlermeldung erzeugt werden.

Durch die Erkennung der Form des Walzgutes kann auch eine "Säbel"-Überwachung durchgeführt werden und bei Überschreiten bestimmter

0068431

Grenzwerte ein Fehlersignal erzeugt werden. Ein säbelförmiger Anfang bzw. ein derart geformtes Ende deuten auf eine Störung des Walzvorgangs hin. Solche Störungen können daher auf einfache Weise zusätzlich erfaßt werden.

Die mit der Streifenbildkamera 18 gewonnenen Werte der Walzbandgeschwindigkeit können durch Differentiation zur Bildung von Beschleunigungswerten weiterverarbeitet werden. Vorteilhafterweise lassen sich die Beschleunigungswerte auf vorgegebene Grenzen hin überwachen. Grenzüberschreitungen signalisieren Störungen, z. B. das Anstoßen des Bandanfangs.

Der Monitor 9 ermöglicht die Überwachung der Vorrichtung.

Bei den vorstehend erläuterten Messungen wurde vorausgesetzt, daß das Walzblech 5 hinreichend starke Infrarotstrahlung abgibt. Bei niedrigen Temperaturen des Walzblechs 5 kann aber auch eine nicht dargestellte Lichtquelle das Walzblech 5 beleuchten. Das von dem Walzblech 5 reflektierte Licht wird dann durch die Streifenbildkameras ausgenutzt. Es kann auch die Form und Breite durch eine Gegenlichtquelle unter dem Walzblech erfaßt werden.

Das Synchronisiersignal für die erste Streifenbildkamera 1 kann auch mittels eines Tachogenerators erzeugt werden, der ein der Walzblechgeschwindigkeit proportionales Signal ausgibt. Beispielsweise kann der Tachogenerator von einer Tastrolle angetrieben werden, die auf dem Walzblech anliegt.

0068431

L i c e n t i a

Patent-Verwaltungs-GmbH

6000 Frankfurt/Main 70, Theodor-Stern-Kai 1

F 81/15
Eb/Mi
21.06.82

Vorrichtung zur Erkennung der Formen von Walzgutenden

Patentansprüche

1. Vorrichtung zur Erkennung der Formen von Walzgutenden, insbesondere der Schopfformen,

d a d u r c h   g e k e n n z e i c h n e t ,

daß die Oberfläche des Walzguts (5) während der Bewegung in einer ersten Streifenbildkamera (1) abbildbar ist, deren lichtelektrische Aufnahmeelemente in einer Zeile quer zur Walzgutbewegungsrichtung (4) angeordnet sind und die durch ein der Walzgutgeschwindigkeit proportionales Signal synchronisiert ist sowie einen mit einem Analog/Digital-Umsetzer verbundenen digitalen Bildspeicher aufweist,

daß die digitalen Daten des Bildspeichers einer nachgeschalteten Auswerteinrichtung (8, 10) für die Festlegung der Schnittlinie zuführbar sind und

daß nach der ersten Streifenbildkamera (1) eine zweite Streifenbildkamera (14), deren lichtelektrische Aufnahmeelemente in einer Zeile in Übereinstimmung mit der Bewegungsrichtung (4) des Walzguts (5) angeordnet sind, an eine die Position des jeweiligen Rands (12) aus den Daten des Bildspeichers fortlaufend bestimmende Auswerteinrichtung (8, 10) angeschlossen ist, die aus dem Abstand des Randes von der Schnittlinie der Schere ein Steuersignal für eine Schere (6) erzeugt, die beim Durchlaufen der Schnittlinie (13) unter der Abscherstelle (15) das Walzgut trennt.

2. Vorrichtung nach Anspruch 1,
d a d u r c h   g e k e n n z e i c h n e t ,
daß vor der ersten Streifenbildkamera (1) eine dritte Streifenbildkamera (18) angeordnet ist, deren lichtelektrische Aufnahmeelemente
in einer Zeile in Übereinstimmung mit der Bewegungsrichtung (4) des
Walzguts (5) angeordnet sind und die mit der die Geschwindigkeit
des Walzguts (5) aus den Daten des Bildspeichers der Streifenbildkamera (18) fortlaufend bestimmenden Auswerteinrichtung (8, 10)
verbunden ist, die das der Walzgutgeschwindigkeit proportionale
Synchronisiersignal an die erste Streifenbildkamera (1) abgibt.

3. Vorrichtung nach Anspruch 2,
d a d u r c h   g e k e n n z e i c h n e t ,
daß für die Geschwindigkeitsbestimmung jeweils ein Oberflächenelement des Walzguts (5) ausgewählt wird, dessen über das Abbild auf
der Diodenzeile der dritten Streifenbildkamera (18) erfaßte Bewegung über einen in der Auswerteinheit (8, 10) angeordneten Prozessor verfolgt wird.

4. Vorrichtung nach Anspruch 1 oder 2,
d a d u r c h   g e k e n n z e i c h n e t ,
daß èin Synchronisiersignal für die erste Streifenbildkamera (1)
durch einen Tachogenerator erzeugt wird.

5. Vorrichtung nach Anspruch 4,
d a d u r c h   g e k e n n z e i c h n e t ,
daß der Tachogenerator mit einer auf dem Walzgut anliegenden Tastrolle verbunden ist.

6. Vorrichtung nach Anspruch 1 oder einem der folgenden Ansprüche,
d a d u r c h   g e k e n n z e i c h n e t ,
daß das Steuersignal für die Schere (6) von der Auswerteinheit (8,
10) in Abhängigkeit von der Materialdicke des Walzguts (5) erzeugt
wird.

7. Vorrichtung nach Anspruch 1 oder einem der folgenden Ansprüche,
d a d u r c h   g e k e n n z e i c h n e t ,
daß die zweite Streifenbildkamera (14), nachdem die Randlage des Walzguts (5) das Sichtfeld überschritten hat, die dritte Streifenbildkamera (18) für die Bestimmung der Randlage aus der Geschwindigkeit des Rands 612) auf die Auswerteinheit (8) umschaltet.

8. Vorrichtung nach Anspruch 1 oder einem der folgenden Ansprüche,
d a d u r c h   g e k e n n z e i c h n e t ,
daß der Inhalt des Bildspeichers der ersten Streifenbildkamera (1) auf einem Monitor (9) darstellbar ist.

9. Vorrichtung nach Anspruch 1 oder einem der folgenden Ansprüche,
d a d u r c h   g e k e n n z e i c h n e t ,
daß durch die dritte Streifenbildkamera (18) die Enden (19) der Walzgutränder und die Geschwindigkeit der Enden (19) erfaßt und daß die gespeicherten Daten an die Auswerteinheit (8, 10) zur Bestimmung der Schnittlinie (21) für die Enden (19) abgegeben werden.

10. Vorrichtung nach Anspruch 1 oder einem der folgenden Ansprüche,
d a d u r c h   g e k e n n z e i c h n e t ,
daß die von der ersten Streifenbildkamera (1) erzeugten Bilder nach der Festlegung der jeweiligen Schnittlinie (13) des Walzgutanfangs zur Messung der Materialbreite ausgewertet werden..

11. Vorrichtung nach Anspruch 3, 4 oder 5,
d a d u r c h   g e k e n n z e i c h n e t ,
daß die mit der dritten Streifenbildkamera (18) festgestellte Geschwindigkeit des Walzgutes (5) auf vorher bestimmte Grenzen der Änderung überwacht wird.

0068431

Fig. 1

Fig. 2

Fig. 3